# EUROPÄISCHE PATENTSCHRIFT

(11) **EP 1 132 658 B1**
(45) Veröffentlichungstag und Bekanntmachung des Hinweises auf die Patenterteilung: **12.09.2007**
(21) Anmeldenummer: 01105186.9
(22) Anmeldetag: 02.03.2001
(51) Int. Cl.: F16H 61/08

(54) **Verfahren zur Verbesserung der Schaltqualität beim Wechsel zwischen zwei Gangstufen in einer Getriebebaueinheit mit einem Gruppenschaltsatz**
Method for improving shift quality during gear shifting between two gear ratios in a compound transmission unit
Procédé pour améliorer la qualité de passage des vitesses lors du changement de vitesses entre deux rapports de vitesse dans une boite de vitesses composite

(30) Priorität: 08.03.2000 DE 10010552
(43) Veröffentlichungstag der Anmeldung: 12.09.2001
(73) Patentinhaber: Voith Turbo GmbH & Co. KG, 89522 Heidenheim (DE)
(72) Erfinder: Körner, Tillmann, Dr., 89551 Zang (DE); Kley, Markus, 74375 Kirchheim a.N. (DE)
(74) Vertreter: Dr. Weitzel & Partner

(56) Entgegenhaltungen:
- EP-A- 0 411 558
- DE-A1- 3 436 190
- DE-A1- 4 424 456
- DE-A1- 19 809 467

## Beschreibung

Die Erfindung betrifft ein Verfahren zur Verbesserung der Schaltqualität beim Wechsel zwischen zwei Gangstufen in einer Getriebebaueinheit mit einem Gruppenschaltsatz.

Getriebebaueinheiten mit Gruppenschaltsatz sind in einer Vielzahl von Ausführungen bekannt. Beispielsweise wird auf das Dokument DE 198 09 467 A1 verwiesen. Dabei ist der Schaltkomfort bei Änderung des Betriebsbereiches durch einen Gangwechsel von einer Vielzahl von Parametern abhängig. Dabei ist auch ersichtlich, daß eine Schaltung, d.h. ein Gangstufenwechsel bei Vollgas und Bergauffahrt, weniger komfortabel sein muß als eine Schaltung bei sanfter Beschleunigung in der Ebene. Des weiteren ist bekannt, daß der Schaltkomfort der Getriebebaueinheit von den Ansteuerbedingungen der entsprechenden Betätigungselemente abhängt. Bei Ausführungen der Getriebebaueinheit mit Gruppenschaltsatz ist jede Gangstufe durch die Betätigung eines Betätigungselementes in der Grundgetriebebaueinheit und dem Gruppenschaltsatz charakterisiert. Bei Vornahme eines Gangstufenwechsels sind dabei wenigstens zwei Betätigungselemente zu lösen und die des einzustellenden Ganges zu betätigen. Die Betätigungselemente des aktuellen zu verlassenden Ganges werden dabei als gehende Betätigungselemente und die Betätigungselemente des einzustellenden, d.h. kommenden Ganges als kommende Betätigungselemente bezeichnet. Die Zeiträume bis zur Öffnung der einzelnen gehenden Betätigungselemente und bis zum Beginn des Schließens der einzelnen kommenden Betätigungselemente bestimmen dabei im wesentlichen die Art der Schaltung und das Verhalten während des Schaltvorganges.

Das Dokument DE 34 36 190 A1, welches den nächstliegenden Stand der Technik beschreibt, offenbart ein Verfahren zur Verbesserung der Schaltqualität, bei dem eine adaptive Steuerung der Schleifzeit des Betätigungselementes eines kommendes Ganges und des Betätigungselementes eines gehendes Ganges erfolgt. Dadurch können Verschleißerscheinungen kompensiert werden.

Der Erfindung liegt die Aufgabe zugrunde, ein Verfahren zur Optimierung des Schaltverlaufes bzw. zur Verbesserung der Schaltqualität einer Getriebebaueinheit durch Variation des Schließ- und/oder Öffnungsbeginns zu realisieren.

Die erfindungsgemäße Lösung ist durch die Merkmale des Anspruchs 1 charakterisiert. Vorteilhafte Ausgestaltungen sind in den Unteransprüchen wiedergegeben.

Das Verfahren zur Verbesserung der Schaltqualität beim Wechsel zwischen zwei Gangstufen einer Getriebebaueinheit mit einem Gruppenschaltsatz, wobei hier eine Gangstufe jeweils durch die Betätigung wenigstens zweier Betätigungselemente charakterisiert ist, ist erfindungsgemäß dadurch charakterisiert, daß bei Vorliegen eines einen erforderlichen Gangwechsel wenigstens mittelbar bedingenden Signales das Schließen eines ersten Betätigungselementes der kommenden Gangstufe eingeleitet wird und die den Beginn des Öffnens oder Schließens charakterisierenden Öffnungs- und Schließzeiten des verbleibenden zweiten Betätigungselementes der kommenden Gangstufe und von zwei Betätigungselementen der gehenden Gangstufe eindeutig zueinander festgelegt werden. Die Festlegung der einzelnen Öffnungs- und Schließzeiten der verbleibenden Betätigungselemente der kommenden Gangstufe und der gehenden Gangstufe erfolgt dabei in einem dreidimensionalen Kennfeld, welches durch mindestens einen geometrischen Körper beschreibbar ist und welches den optimalen Betriebsbereich hinsichtlich wenigstens einer Zustands- bzw. Bewertungsgröße im Antriebsstrang beschreibt. Als Zustands- oder Bewertungsgrößen werden dabei Betriebskenngrößen, die den Gangstufenwechsel beschreiben, angesehen. Dabei wird während eines vorzunehmenden Gangstufenwechsels zwischen zwei bestimmten Gangstufen die sich einstellende Änderung der wenigstens einen Zustandsgröße erfaßt und mit der sich theoretisch durch die eindeutige Zuordnung im Kennfeld theoretisch zu erzielenden angestrebten Änderungen verglichen. Bei einer Abweichung wird beim nächsten Gangstufenwechsel zwischen den genannten Gangstufen eine Änderung des Betriebspunktes im dreidimensionalen Kennfeld durch Änderung der Öffnungs- und/oder Schließzeiten der einzelnen kommenden und gehenden Betätigungselemente in entsprechender Zuordnung zueinander um einen bestimmten Korrekturwert realisiert. Zur Erzielung des Idealfalles erfolgt die Anpassung adaptiv.

Das dreidimensionale Kennfeld kann entweder
a) bereits vor Inbetriebnahme des Fahrzeuges, insbesondere des ersten Gangstufenwechsels zwischen zwei Gangstufen in der Steuervorrichtung der Getriebebaueinheit oder einer übergeordneten Steuervorrichtung, beispielsweise der Fahrsteuerung beim Einsatz in Fahrzeugen fest vorgegeben sein oder
b) aus einer Idealkennlinie oder einem Idealkennbereich während des Betriebes des Fahrzeuges durch Anpassung entwickelt werden.

Im erstgenannten Fall a) besteht dabei die Möglichkeit, daß die Vorgabe fest erfolgt, ohne spätere mögliche Änderungen. Denkbar ist es jedoch auch und vorzugsweise angestrebt, daß das vor dem ersten Schaltvorgang bereits vorliegende Kennfeld im Verlauf des Betriebes des Fahrzeuges, insbesondere über eine Vielzahl von Schaltungen gleicher Art zwischen zwei bestimmten Gangstufen entsprechend des mit dem Schaltvorgang erzielten Ergebnisses der Änderung einer, den Schaltvorgang wenigstens mittelbar charakterisierenden Größe angepaßt wird.

Vorzugsweise wird jedoch eine automatische Entwicklung des dreidimensionalen Kennfeldes aus einer Idealkennlinie oder eines Idealkennbereiches vorgenommen. Durch diese Anpassung ist es möglich, fertigungstechnische Toleranzen hinsichtlich der Funktion und Wirkungsweise der Betätigungselemente in optimaler Art und Weise auszugleichen.

Unter einem weiteren Aspekt der Erfindung ist es auch möglich, das dreidimensionale Kennfeld nicht speziell aus einer theoretischen Idealkennlinie für den Gangstufenwechsel zwischen zwei bestimmten Gangstufen zu entwickeln, sondern aus einer sogenannten Grundkennlinie, welche standardmäßig für eine Getriebebaueinheit bestimmten Typs vorgebbar oder festlegbar ist. Der zu erzielende Idealfall ist dabei dadurch charakterisiert, daß die Gruppenschaltung eine Qualität erreicht, welche durch einen derartigen Komfort beschreibbar ist, daß die Schaltung nicht vom Fahrer beziehungsweise Reisenden registriert wird. Ein wesentliches Kriterium für eine derartige hochqualitative Schaltung ist, daß der Übergang der Beschleunigung kontinuierlich erfolgt und nicht ruckartig. Der mittels der Grundkennlinie beschreibbare Fall kann dem Idealfall entsprechen oder weicht von diesem in entsprechender Weise ab, wobei jedoch immer noch einigermaßen ausreichende Schaltergebnisse beim Gangstufenwechsel zwischen zwei bestimmten Gangstufen erzielt werden sollen. Aus dieser Grundkennlinie kann dann über eine Vielzahl von Gangstufenwechseln zwischen den jeweiligen beiden Gangstufen die Idealkennlinie entsprechend dem zu erzielenden Ergebnis, insbesondere einem kontinuierlichen Übergang der Beschleunigung, entwickelt werden. Dies erfolgt vorzugsweise selbstlernend in der Steuervorrichtung der Getriebebaueinheit oder einer dieser nebengeordneten oder übergeordneten Steuervorrichtung.

Das dreidimensionale Kennfeld, welches durch mindestens einen geometrischen Körper beschreibbar ist, unterliegt hinsichtlich seiner Form keinen Grenzen. Unter einem weiteren Aspekt der Erfindung besteht die Möglichkeit, auch nach Erstellung des dreidimensionalen Kennfeldes aus einer Idealkennlinie beziehungsweise im Idealkennbereich eine Anpassung nach bestimmten Referenzzeiträumen oder Referenzstrecken oder im Rahmen bestimmter Zeitintervalle vorzunehmen. Vorzugsweise erfolgt diese nachträgliche Anpassung, welche beispielsweise durch Verschleißerscheinungen an den Betätigungselementen erforderlich werden können, selbstlernend, das heißt automatisch. Dieser Automatismus kann, wie bereits ausgeführt, nach Ablauf bestimmter Zeitintervalle aktiviert werden beziehungsweise wahlweise auf Wunsch. In diesem Fall sind die entsprechenden dazu erforderlichen Daten in einer Speichereinrichtung zu hinterlegen und bei Bedarf gegebenenfalls abzurufen.

Als Einflußparameter fungieren die Schließzeit des verbleibenden Betätigungselementes der kommenden Gangstufe und die Öffnungszeiten der Betätigungselemente der gehenden Gangstufe. Bei Ausführung der Getriebebaueinheit mit einem Gruppenschaltsatz ist dabei zur Beschreibung einer Gangstufe immer ein Betätigungselement dem Grundgetriebe und ein Betätigungselement dem Gruppenschaltsatz zugeordnet. Dabei sind Ausführungen denkbar, bei welchen
a) ein Einflußparameter oder
b) zwei Einflußparameter oder
c) drei Einflußparameter
bei nichtoptimaler Änderung der Zustandsgröße während eines funktionierenden Gangstufenwechsels beim nächsten Gangstufenwechsel zwischen den beiden bestimmten Gangstufen geändert werden.

Die Änderung um einen Korrekturwert erfolgt adaptiv, wobei der Korrekturwert entweder
a) vordefiniert oder
b) berechenbar
c) frei wählbar ist.

Die Vorgehensweise gestaltet sich wie folgt:

Bei einer ersten Schaltung, das heißt einem Gangstufenwechsel zwischen zwei bestimmten Gangstufen, wobei der Gangstufenwechsel durch die Richtung des Gangstufenwechsels und die Bezeichnung der beiden Gangstufen beschreibbar ist, wird wenigstens eine den Gangstufenwechsel wenigstens mittelbar charakterisierende Größe erfaßt. Bei unbefriedigendem Resultat, beispielsweise unbefriedigendem Beschleunigungsverlauf wird dafür beim nächsten Gangstufenwechsel zwischen den beiden Gangstufen in der gleichen Richtung, das heißt Hoch- oder Rückschaltung, wenigstens ein Einflußparameter verändert. Beim weiteren Gangstufenwechsel gleicher Art werden wieder die den Gangstufenwechsel charakterisierenden Größen erfaßt und mit einem theoretisch sich einstellenden Idealfall verglichen. Aus den beiden Gangstufenwechseln wird die Entwicklung der Zustandsgrößen erfaßt und aus dem Vergleichsergebnis die Richtung für weitere Optimierung der Schließ- und Öffnungszeiten abgeleitet, das heißt eine Ableitung bezüglich der Änderung der Einflußparameter.

Die erfindungsgemäße Lösung wird nachfolgend anhand von Figuren erläutert. Darin ist im einzelnen folgendes dargestellt:
- Figur 1: verdeutlicht in schematisch vereinfachter Darstellung anhand eines Blockschaltbildes das Grundprinzip eines erfindungsgemäß gestalteten Verfahrens zur Verbesserung der Schaltqualität beim Wechsel zwischen zwei Gangstufen einer Getriebebaueinheit;
- Figur 2: verdeutlicht eine Ausführung eines Zuordnungskennfeldes;
- Figuren 3a bis 3e: verdeutlichen Kennlinienverläufe für Zustandsgrößen unter unterschiedlichen Randbedingungen in Form von veränderten Öffnungs- und Schließzeiten der kommenden bzw. gehenden Betätigungselemente;
- Figuren 4a bis 4d: verdeutlichen sich für gleichbleibende Randbedingungen einstellende unterschiedliche Optimalbereiche für das Zuordnungskennfeld für eine Vielzahl von Zustandsgrößen bei Variation der Öffnungszeiten der gehenden Schaltbeziehungsweise Betätigungselemente und konstanter Schließzeit der kommenden Schaltelemente.

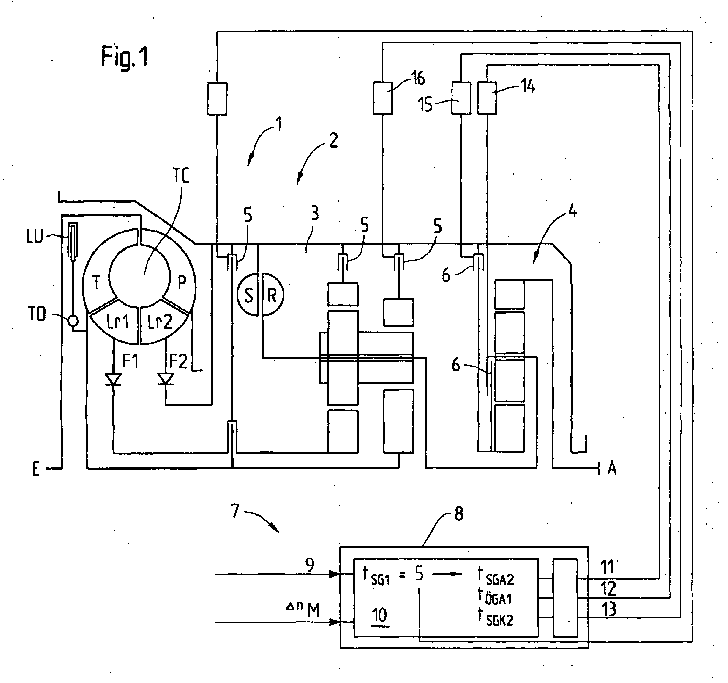

Die Fig. 1 verdeutlicht in schematisch vereinfachter Darstellung anhand eines Blockschaltbildes das Grundprinzip eines erfindungsmäß gestalteten Verfahrens zur Verbesserung der Schaltqualität beim Wechsel zwischen zwei Gangstufen in einer Getriebebaueinheit 1, umfassend eine Grundgetriebebaueinheit 2, umfassend wenigstens eine Drehzahl-/Drehmomentenwandlungseinrichtung 3 und eine Gruppenschalteinrichtung in Form eines Gruppenschaltsatzes 4, welcher mit der Grundgetriebebaueinheit 2 mechanisch gekoppelt ist. Dabei ist es unerheblich, ob der Gruppenschaltsatz 4 in Einbaulage der Getriebebaueinheit 1 in Leistungsrichtung von einer Getriebeeingangswelle E zur Getriebeausgangswelle A räumlich vor der Grundgetriebebaueinheit 2 oder hinter der Grundgetriebebaueinheit 2 angeordnet ist. Entscheidend ist, daß die Leistungsübertragung zwischen der Getriebeeingangswelle E und der Getriebeausgangswelle A durch den Gruppenschaltsatz beeinflußbar ist. Die einzelnen Gangstufen sind dabei durch die Betätigung wenigstens eines, der Grundgetriebebaueinheit 2 zugeordneten Betätigungselementes 5 und die Betätigung wenigstens eines, dem Gruppenschaltsatz 4 zugeordneten Betätigungselementes 6 charakterisiert. Unter Betätigungselement werden dabei die Einrichtungen verstanden, welche die Leistungsübertragung in einer bestimmten Gangstufe durch Wirkung auf die Getriebeelemente ermöglichen. Diese können als Brems- und/oder Kupplungseinrichtungen ausgeführt sein, wobei deren Gestaltung und Auswahl sich aus der zu erfüllenden Funktion ergibt. Beim Wechsel zwischen zwei Gangstufen werden die Betätigungselemente 5 und 6 der aktuellen, d.h. momentan eingelegten Gangstufe Gₐₖₜᵤₑₗₗ gelöst und die in der einzulegenden, d.h. kommenden Gangstufe G_{kommend} geschlossen. Dabei wird die aktuell eingelegte Gangstufe G_{aktuell'} welche verlassen werden soll, auch als gehende Gangstufe G_{gehend} bezeichnet. Die zu lösenden Betätigungselemente 5 und 6 der gehenden Gangstufe G_{gehend} werden dabei auch als gehende Betätigungselemente bezeichnet. Die in Eingriff bzw. in Wirkung bringbaren Betätigungselemente der kommenden, d.h. einzustellenden Gangstufe G_{kommend} werden als kommende Betätigungselemente bezeichnet. Die Betätigungselemente können unterschiedlich ausgeführt sein, vorzugsweise sind diese als Kupplungen oder Bremselemente ausgeführt. Dabei ist es im einzelnen von der konkreten Getriebekonfiguration abhängig, welche Art der Betätigungselemente 5 und 6 für die einzelne Gangstufe einzulegen sind. Der Getriebebaueinheit 1 ist eine Steuervorrichtung 7 zugeordnet, welche eine Steuereinrichtung 8 umfaßt. Bei der Steuervorrichtung 7 kann es sich um eine, speziell nur der Getriebebaueinheit 1 zugeordnete Steuerung handeln, welche mit einer übergeordneten Steuervorrichtung, beispielsweise der Fahrzeugsteuerung, in Wirkverbindung steht oder aber beim Einsatz von Fahrzeugen direkt um die Fahrzeugsteuerung. In Analogie gelten diese Aussagen dann auch für die Steuereinrichtung 8, bei welcher es sich entweder um die Getriebesteuereinrichtung, eine einer anderen Antriebskomponente zugeordnete Steuereinrichtung oder eine, einer Mehrzahl von Antriebskomponenten bzw. einem Antriebssystem zugeordnete Steuereinrichtung handelt. Bei der Steuereinrichtung 8 handelt es sich jedoch immer um eine elektronische Steuereinrichtung.

Bei Vorliegen eines das Erfordernis nach einem Gangstufenwechsel wenigstens mittelbar beschreibenden Signales wird dieses einem Eingang 9 der Steuereinrichtung 8 zugeführt. In der Steuereinrichtung 8 wird aufgrund des einen erforderlichen Gangstufenwechsel signalisierenden Signales ein Betätigungselement 5 der Getriebegrundbaueinheit oder ein Betätigungselement 6 des Gruppenschaltsatzes, welche die kommende, d.h. einzulegende Gangstufe.G_{kommend} charakterisiert, begonnen zu schließen. Dieser durch den Beginn des Schließvorganges eines ersten kommenden Betätigungselementes charakterisierte Zeitpunkt t_{SGK1} wird auch als Schaltbeginn t_{Schaltbeginn} bezeichnet. Relativ zu diesem Zeitpunkt t_{Schallbeginn} wird der Schließbeginn t_{SGK2} des zweiten Betätigungselementes der einzulegenden Gangstufe G_{kommend} und der jeweilige Öffnungsbeginn t_{ÖGA1} des einen, die aktuell eingelegte, d.h. zu verlassende Gangstufe durch dessen Einlegung charakterisierenden Betätigungselementes und der Öffnungszeit t_{ÖGA2} des zweiten, die aktuell eingelegte, d.h. zu verlassende Gangstufe charakterisierende Betätigung des zweiten Betätigungselementes variiert. Dabei ist es unerheblich, ob als erstes Betätigungselement das Betätigungselement 5 der Grundgetriebebaueinheit 2 oder 6 des Gruppenschaltsatzes 4 geöffnet oder geschlossen wird. Entscheidend ist, daß in jeder Gangstufe ein Betätigungselement 6 des Gruppenschaltsatzes 4 und ein Betätigungselement 5 der Grundgetriebebaueinheit 2 betätigt werden.

Die einzelnen relativ zum Schaltbeginn t_{Schaltbeginn} zu realisierenden Schließund Öffnungszeiten der Betätigungselemente der aktuell eingelegten, d.h. zu verlassenden Gangstufe G_{gehend} und der einzulegenden Gangstufe G_{kommend} werden erfindungsgemäß adaptiv optimiert. Dazu werden erfindungsgemäß hinsichtlich des zu erzielenden Übertragungsverhaltens und der Rückwirkung auf andere Systeme, insbesondere die Antriebsmaschine, vordefinierbare Bereiche festgelegt, in welchen die einzelnen Zeitpunkte für das Schließen oder das Öffnen der Betätigungselemente festgelegt sind, wobei durch Verschiebung innerhalb der festgelegten Bereiche bestimmte zusätzliche positive oder negative Einflüsse erzielt oder ausgeschaltet werden können. Als derartige Bewertungskriterien für die Qualität eines Schaltvorganges werden dabei wenigstens die nachfolgend genannten Größen angesehen und deren zeitlicher Verlauf:
- Drehzahl der Antriebsmaschine, insbesondere zeitlicher Verlauf der Drehzahl der Antriebsmaschine
- positive oder negative Beschleunigung des Fahrzeuges und
- der Ruck,
wobei wenigstens eines berücksichtigt wird. Vorrangig wird dabei wenigstens die Beschleunigung als Bewertungskriterium verwendet.

Dabei werden die als Bewertungskriterien bestimmten Größen nicht nur zu einem bestimmten vordefinierten Zeitpunkt ausgewertet, sondern unter anderem auch deren Änderung während des Schaltvorganges oder über einen bestimmten Teilbereich des Schaltvorganges berücksichtigt.

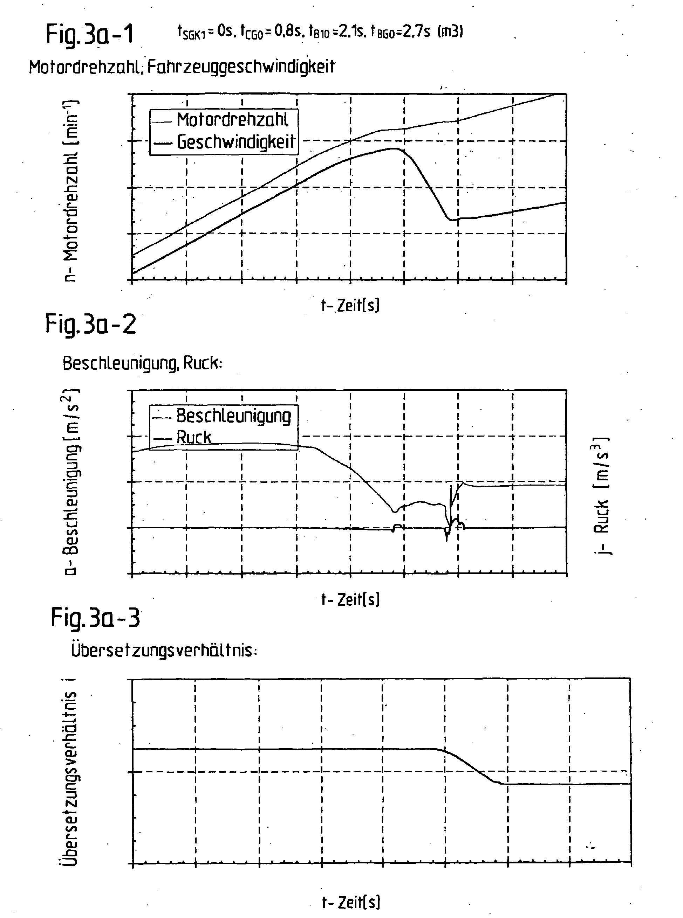

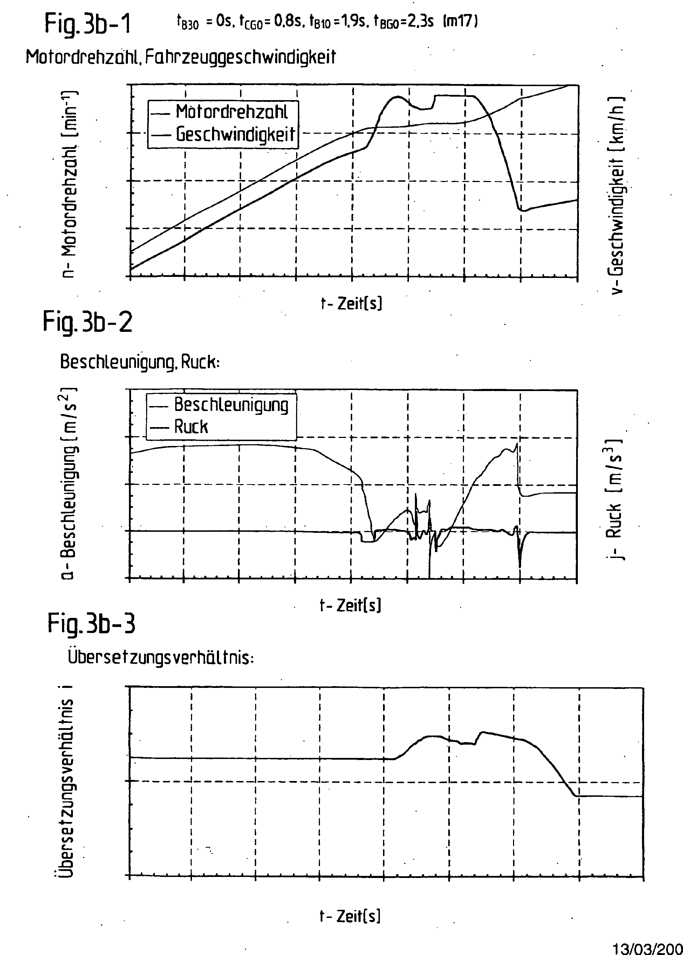

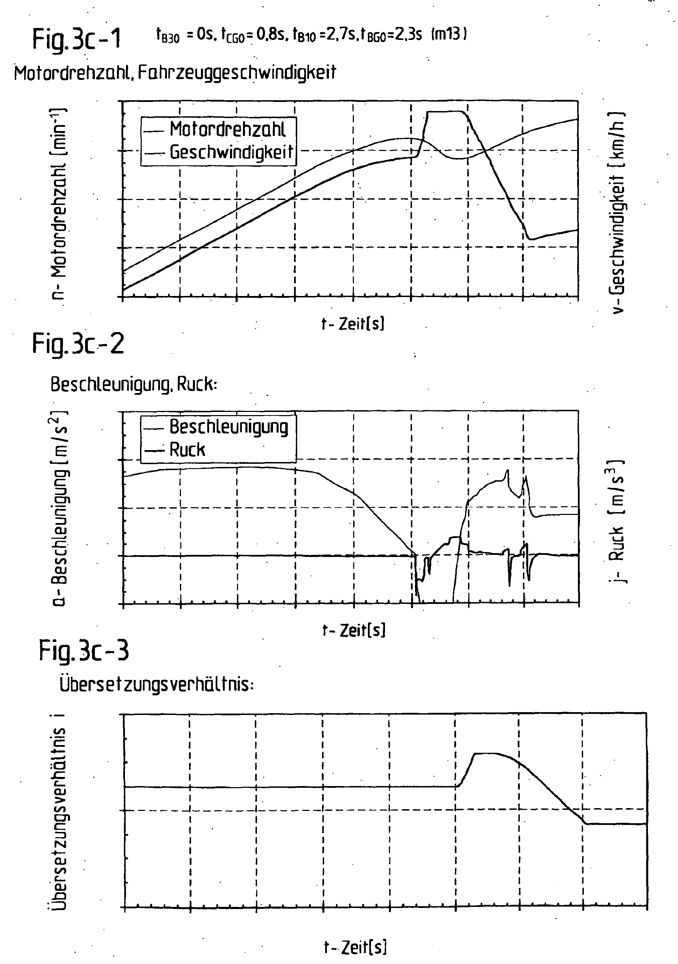

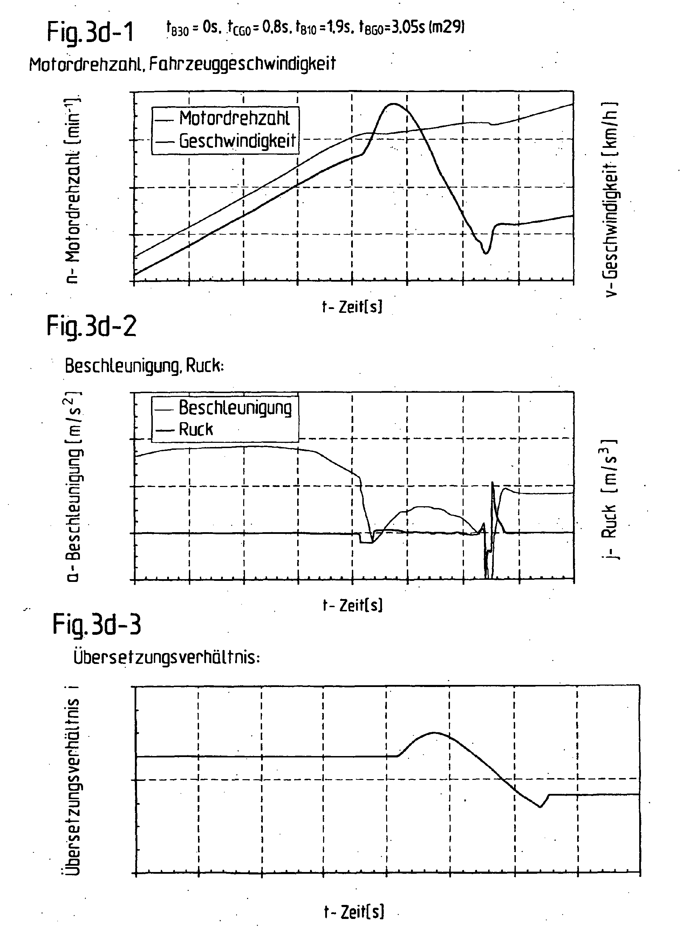

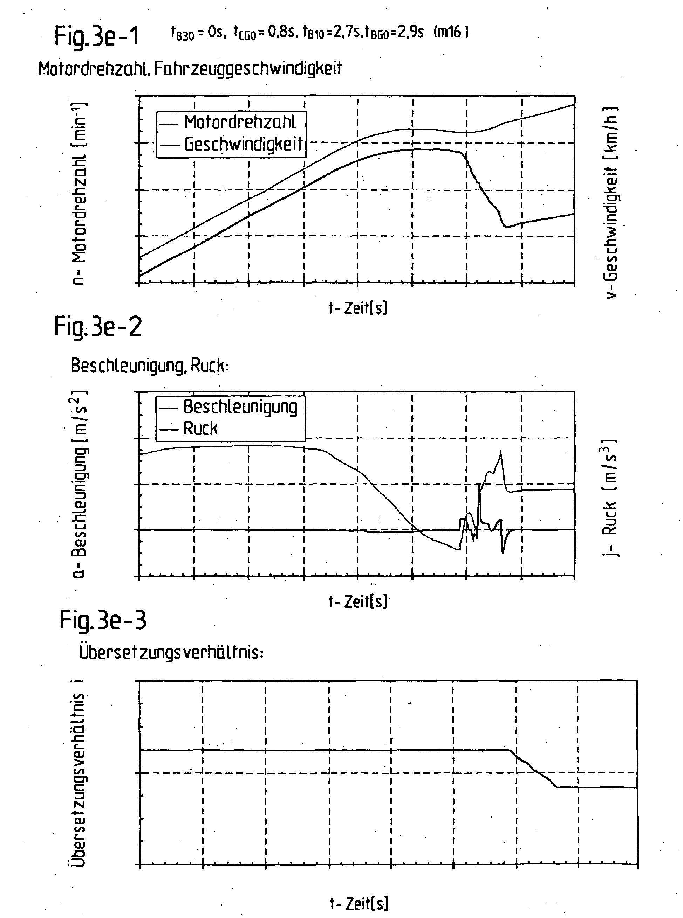

Erfindungswesentlich ist die Optimierung des Schaltvorganges, insbesondere der einzelnen Schließ- und Öffnungszeiten t_{SGK1,} t_{SGK2} bzw. t_{ÖGA1} und t_{ÖGA2} erfolgt dabei erfindungsgemäß derart, daß eine gewünschte vordefinierte Motordrehzahländerung Δn_{M} eingestellt bzw. ein bestimmter Bereich der Motordrehzahländerung verlassen wird. Diesbezüglich weist die Steuereinrichtung eine Zuordnungseinrichtung 10 auf, welche in Abhängigkeit eines gewünschten Ergebnisses für eine Motordrehzahländerung Δn_{M}, welche vorzugsweise als weitere Eingangsgröße der Steuereinrichtung zuführbar ist oder aber in dieser für bestimmte Gangstufenwechsel in Abhängigkeit von der aktuellen Motordrehzahl und eventuell anderer Einflußgrößen bereits hinterlegt ist. In der Zuordnungseinrichtung werden dann je nach gewünschter Motordrehzahländerung für den folgenden Schaltvorgang die Öffnungszeiten t_{ÖGA1} und t_{ÖGA2} der Betätigungselemente des aktuell eingelegten Ganges und die Schließzeit t_{SGK2} der zweiten kommenden Betätigungseinrichtung festgelegt. Vorzugsweise erfolgt dies in einem Diagramm, in welchem dreidimensional die Bereiche für die Öffnungszeiten und Schließzeiten der einzelnen Betätigungselemente abgelegt sind und die damit einen geometrischen Grundkörper beschreiben, welcher entsprechend den zu beurteilenden und einzustellenden Bewertungskriterien unterschiedlich ausgeführt sein kann. Die konkrete mögliche Ausgestaltung eines derartigen Grundkörpers, in welchem in dreidimensionaler Richtung die einzelnen, die Schaltqualität beeinflussenden Größen in Form der Öffnungs- und Schließzeiten der einzelnen der kommenden und gehenden Betätigungselemente niedergelegt sind, ist in der Fig. 3 verdeutlicht. Für das erfindungsgemäße Verfahren ist entscheidend, daß eine derartige Zuordnung der einzelnen Öffnungs- und Schließzeiten möglich ist, wobei die Abhängigkeit der einzelnen Bewertungskriterien von den Öffnungs- und Schließzeiten bekannt ist. Gemäß deren Abhängigkeit des Schaltbeginnes t_{Schaltbeginn} und der gewünschten einzustellenden Motordrehzahländerung erfolgt eine Ansteuerung der einzelnen Betätigungselemente, insbesondere zum Schließen der Betätigungselemente der kommenden, einzustellenden Gangstufe und der Öffnung der Elemente der aktuellen eingelegten, d.h. kommenden Gangstufe G_{gehend}. Dazu werden von der Steuereinrichtung Stellgrößen zur Ansteuerung der Betätigungselemente ausgegeben, wobei diese beispielsweise bei paralleler Datenübertragung an den einzelnen Ausgängen 11, 12 und 13 ausgegeben werden. Die einzelnen Ausgänge 11,12 und 13 sind dabei jeweils mit einer Stelleinrichtung 14, 15 bzw. 16 für die einzelnen Betätigungselemente der kommenden und gehenden Gangstufe G_{kommend} bzw. Gₐₖₜᵤₑₗₗ verbunden. Für diesen Gangwechsel wird die aktuelle Größe der Motordrehzahländerung

Δn_{Maktuell} erfaßt und mit der eigentlichen gewünschten Änderung der Motordrehzahl verglichen. Liegt diesbezüglich eine Abweichung vor, erfolgt beim nächsten Gangstufenwechsel, welcher die gleiche Änderung des Betriebsbereiches bedingt, eine adaptive Änderung der einzelnen Öffnungs- und Schließzeiten der kommenden und gehenden Betätigungselemente. Die Änderung erfolgt dabei um einen Korrekturwert k, welcher fest vorgebbar oder berechenbar oder frei wählbar ist. Die Änderung um den Korrekturwert erfolgt vorzugsweise lediglich additativ oder durch Subtraktion. Der Korrekturwert selbst kann, je nach Einsatzfall fest vorgebbar, berechenbar, frei wählbar oder anderweitig ermittelbar sein. Vorzugsweise wird eine Änderung in Teilzeitschritten vorgenommen. Dabei ist jedoch zu berücksichtigen, daß im in der Zuordnungseinrichtung abgelegten Kennfeld die Abhängigkeiten zwischen den einzelnen Schließ- und Öffnungszeiten der verbleibenden, kommenden und gehenden Betätigungselemente eindeutig einander zugeordnet sind. Somit wird vorzugsweise lediglich einer der Zeitpunkte - Öffnungszeitpunkt oder Schließzeitpunkt - der kommenden oder gehenden Betätigungselemente variiert, wobei automatisch eine Zuordnung der entsprechenden verbleibenden Schließ- bzw. Öffnungszeiten erfolgt. Vorzugsweise wird dabei die Schließzeit des zweiten kommenden Betätigungselementes adaptiv geändert.

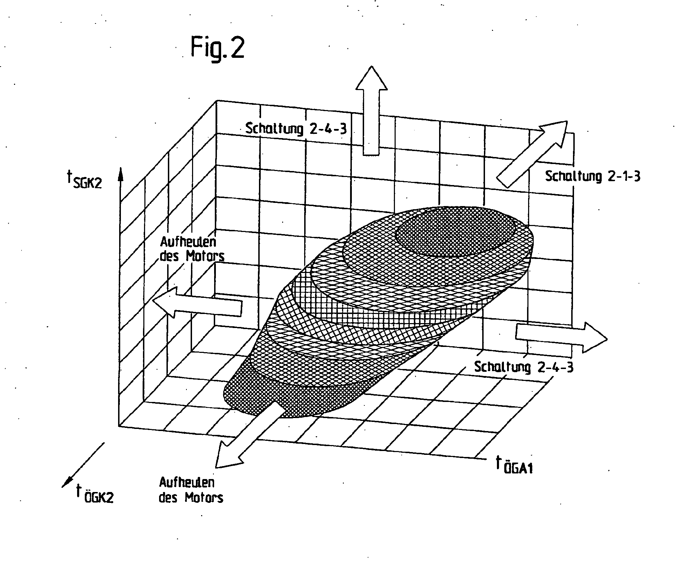

Zur Realisierung einer eindeutigen Zuordnung nach Einleitung eines Schaltvorganges, d.h. nach Beginn des Schließvorganges eines der Betätigungselemente der kommenden Gangstufe, wird erfindungsgemäß ein Zuordnungskennfeld in Form eines geometrischen Grundkörpers, welcher dreidimensional in einem Diagramm beschreibbar ist, erstellt. Dieses Zuordnungskennfeld ist in der Fig. 2 dargestellt. Die Erstellung des Zuordnungskennfeldes kann entweder durch Berechnung oder Auswertung von Probeschaltungen erfolgen. Dabei ergibt sich das Kennfeld vorzugsweise als Schnittmenge aus einer Vielzahl einzelner Kennfelder für einzelne einander zuordenbare Öffnungs- und Schließzeiten der kommenden und gehenden Schaltelemente, wobei die Zuordnung zueinander jeweils hinsichtlich unterschiedlicher Bewertungskriterien erfolgt. Ein wesentliches Bewertungskriterium stellt dabei die Motordrehzahländerung Δn_{M} dar. Als weitere Bewertungskriterien und damit Einzelkennfelder werden die Beschleunigungsänderung des Fahrzeuges, in welchem das Getriebe integriert ist, Δa, der Beschleunigungseinbruch Δa_{Schaltmin} und die Ruckänderung Δj angesehen. Die Entwicklung bzw. Festlegung der Kennfelder erfolgt dabei auch unter Berücksichtigung der in der ungünstigsten Fahrsituation auftretenden Einflußparameter. Als Beschleunigungseinbruch Δa_{Schaltmin} wird dabei die kleinste Beschleunigung während eines Schaltvorganges definiert, oder die welche sich bei größerer Änderung über eine bestimmte Zeit einstellt . Der Beschleunigungseinbruch findet deshalb Berücksichtigung, da eine Schaltung mit großer Beschleunigungsänderung ohne Zugkrafteinbruch eine bessere Schaltung darstellt, als eine Schaltung mit gleich großer Beschleunigungsänderung mit Zugkrafteinbruch.

Die Figuren 3a bis 3e verdeutlichen jeweils anhand von Diagrammen den Einfluß der einzelnen Schließ- und Öffnungszeiten auf die entsprechende Bewertungsgröße, insbesondere den Verlauf der Bewertungsgröße über die Schaltdauer. Die Figuren 3a bis 3e verdeutlichen dabei Verläufe der Bewertungskriterien, welche im Optimalbereich liegen oder aber jedoch ein nicht gewünschtes Verhalten und damit nicht gewünschte Eigenschaften des Gangwechsels bedingen. Die einzelnen Kennlinien werden dabei in Abhängigkeit der gewählten Schließ- und Öffnungszeiten der einzelnen kommenden und gehenden Betätigungselemente relativ zum Schaltbeginn t_{Schaltbeginn}, d.h. dem Beginn des Schließens des ersten kommenden Betätigungselementes erzeugt. Aus der Vielzahl der entsprechend unterschiedlich gewählten Schließ- und Öffnungszeiten der einzelnen Betätigungselemente relativ zum t_{Schaltbeginn} werden Bereiche in Form eines dreidimensionalen Kennfeldes festgelegt, die sich hinsichtlich wenigstens eines der Bewertungskriterien oder aber einer Mehrzahl von Bewertungskriterien als optimaler Bereich darstellt. Die Figuren 3a-1 bis 3a-3 verdeutlichen dabei die sich einstellenden Kennlinien für eine optimierte Schließkonfiguration des zweiten kommenden Betätigungselementes und der Öffnung der beiden gehenden Betätigungselemente. Die Figur 3a-1 verdeutlicht dabei den Motordrehzahlverlauf n über die Schaltzeit t, die Figur 3a-2 den Beschleunigungs- und Ruckverlauf während des Schaltvorganges und die Figur 3a-3 die Änderung des Übersetzungsverhältnisses i relativ zum Schaltbeginn t_{Schaltbeginn}. Als Öffnungs- und Schließzeiten wurden hier folgende Werte angenommen:
- Schließzeit des zweiten Betätigungselementes t_{SGK2} = 1,2 sek
- Öffnungszeit des ersten gehenden Betätigungselementes t_{ÖGA1} = 2,9 sek
- Öffnungszeit des zweiten gehenden Betätigungselementes t_{ÖGA2} = 3,1 sek.

Die Figur 3b verdeutlicht die Kennlinienverläufe entsprechend Figur 3a für abgewandelte Öffnungs- und Schließzeiten. Dabei wird der gleiche Gangstufenwechsel zugrundegelegt. Die Öffnungszeiten der beiden gehenden Betätigungselemente t_{ÖGA1} und t_{ÖGA2} wurden gegenüber den in der Figur 3a zugrundeliegenden Ausgangsbedingungen verringert. Die Schließzeit des zweiten kommenden Betätigungselementes t_{SGK2} wurde ebenfalls verringert. Anhand des Motordrehzahlverlaufes und damit der Geschwindigkeit wird ersichtlich, daß aufgrund des zu frühen Öffnes der beiden gehenden Betätigungselemente der Motor aufheult und die Beschleunigung einbricht. Durch das Aufheulen des Motors speichert dieser sehr viel Energie, die zu einem Überschwingen der Beschleunigung bei anschließendem vollständigen Schließen des zweiten kommenden Betätigungselementes führt. Der Übergang vom Übersetzungsverhältnis i der gehenden Gangstufe G_{gehend} zur kommenden Gangstufe G_{kommend} dauert erheblich länger, wobei dieser Zeitpunkt durch das Rutschen der Betätigungselemente bei Ausbildung dieser als Kupplungen oder Bremseinrichtungen in Form von Reibkupplungen durch das Rutschen bestimmt ist. Bei den in den Figuren 3c-1 bis 3c-3 dargestellten Kennlinienverläufen wird als Randbedingung von einem Schließbeginn des zweiten zu betätigenden kommenden Betätigungselementes analog zu den in den Figuren 3-1 bis 3-3 dargestellten Kennlinien ausgegangen, während demgegenüber der Öffnungszeitpunkt des zweiten gehenden Betätigungselementes beibehalten wird und der Öffnungszeitpunkt des ersten gehenden Betätigungselementes hinter dem des zweiten gehenden Betätigungselementes gelegt wird. Auch hier ergibt sich eine starke Änderung der Motordrehzahl in Form eines starken Anstieges. Der Grund dafür liegt in der Zurückschaltung des Getriebes in einen unteren Gang, was deutlich am Übersetzungsverhältnis i gemäß Figur 3c-3 wird. Infolgedessen wird das Fahrzeug stark von der Antriebsmaschine gebremst, was an der negativen Beschleunigung a zu erkennen ist. Eine Schaltung in den nächst höheren Gang ist mit dieser Konfiguration nicht möglich.

Wird nunmehr gegenüber den den Figuren 3b-1 bis 3b-3 zugrundeliegenden Ausgangsdaten für die Öffnungs- und Schließzeiten der einzelnen kommenden und gehenden Betätigungselemente der Zeitpunkt des Öffnens des zweiten gehenden Betätigungselementes weiter nach hinten verschoben, d.h. ein spätes Öffnen bei gleichzeitig frühem beibehaltenen Öffnen des ersten gehenden Betätigungselementes, steigt die Drehzahl der Antriebsmaschine, d.h. die Motordrehzahl n zunächst an, was zu einem Aufheulen des Motors führt, wird jedoch dann sehr stark gedrückt. Anhand der Kennlinie für das Übersetzungsverhältnis i gemäß der Figur 3d-3 ist erkennbar, daß Tendenzen zur Rückschaltung vorhanden sind.

Die Figuren 3e-1 bis 3e-3 verdeutlichen die entsprechenden Kennlinienverläufe zum Vergleich gegenüber den in den Figuren 3a bis 3d dargestellten für einen Verlauf der Schließkonfiguration mit entsprechend sehr späten Öffnen beider gehenden Betätigungselemente. Dabei findet kein starker Anstieg der Motordrehzahl statt, diese ändert sich entsprechend dem zu erzielenden Gangsprung. Die Beschleunigung a erhält über einen bestimmten Zeitraum einen negativen Wert und der Übergang von einem Übersetzungsverhältnis zum anderen ist entsprechend kurz.

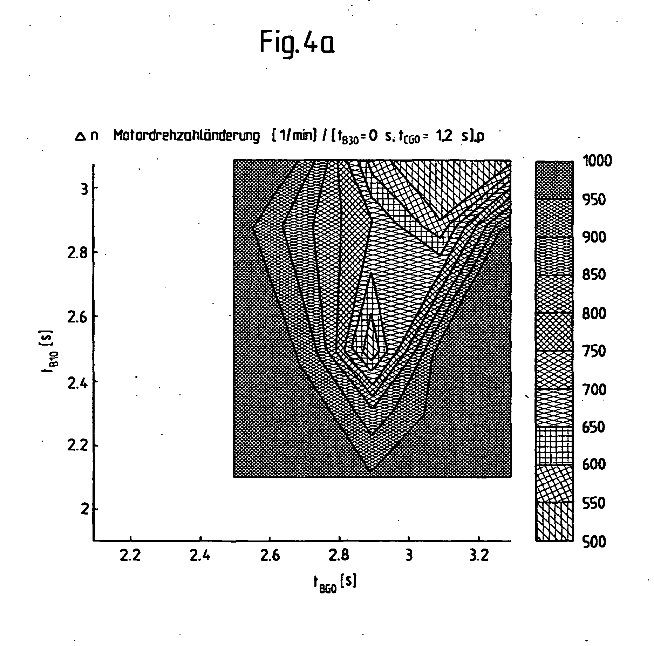

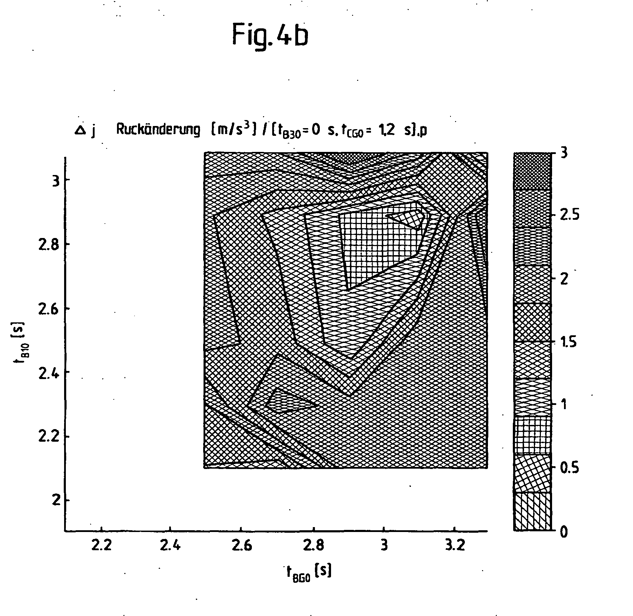

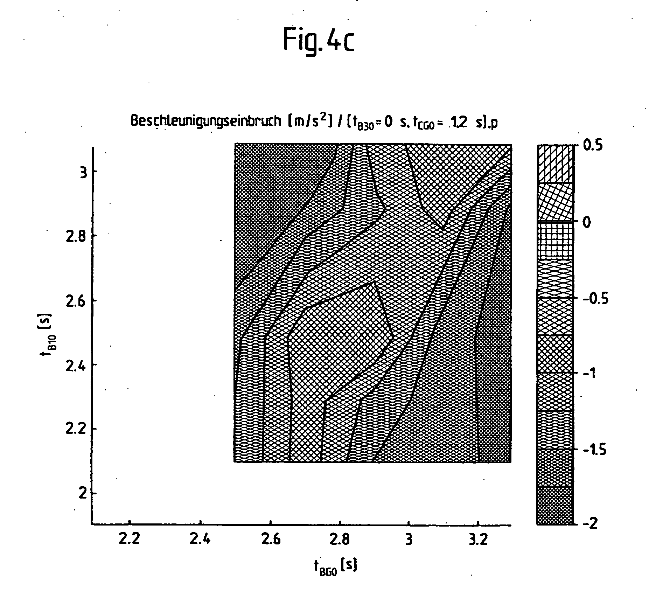

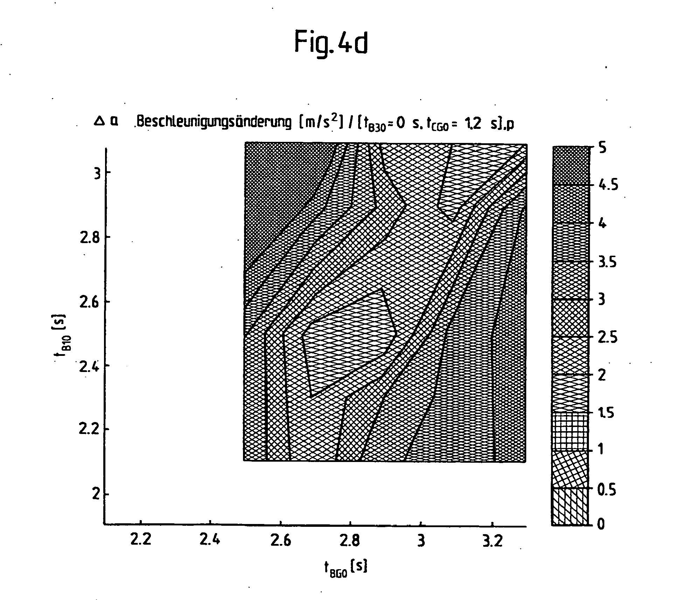

Werden die mittels der vorgegebenen Randbedingungen für die Schließ- und Öffnungszeiten der einzelnen Betätigungselemente in einem Diagramm eingetragen unter Auswertung der sich für die einzelnen Fälle ergebenden Erkenntnisse hinsichtlich des Verhaltens in bezug auf die Eigenschaften des realisierten Schaltvorganges ergeben sich für jeden einzelnen Kennlinienverlauf optimierte Bereiche. Diese sind als Beispiel in Figur 4 wiedergegeben. Bei diesen wurden für die einzelnen Kennlinien unter Berücksichtigung eines gleichbleibenden Schließbeginns des zweiten kommenden Betätigungselementes die Öffnungszeiten der beiden gehenden Betätigungselemente variiert. Dabei ergeben sich Bereiche, welche hinsichtlich eines bestimmten Bewertungskriteriums ein Optimum darstellen. Diese Optimumbereiche sind schraffiert dargestellt. Dabei verdeutlicht Figur 4a ein entsprechendes Kennfeld für das Verhalten der Motordrehzahländerung Δn, die Figur 4b das sich ergebende zweidimensionale Kennfeld für die Ruckänderung Δj, die Figur 4c das zweidimensionale Kennfeld für den Beschleunigungseinbruch, Figur 4d das sich ergebende Kennfeld für die Beschleunigungsänderung Δa. Daraus wird ersichtlich, daß die Optimumsbereiche unter gleichen Randbedingungen bei unterschiedlichen Öffnungszeiten der gehenden Betätigungselemente liegen. Zur Bildung des dreidimensionalen Kennfeldes, welches die Grenzbereiche abstecken soll, werden dabei aus den einzelnen Optimumsbereiche Schnittmengen gebildet bzw. diese einander überlagert, wobei unter diesen Bedingungen das eine oder andere Bewertungskriterium auch nicht unbedingt optimale Eigenschaften aufweist. Bezüglich der Ausbildung des dreidimensionalen Kennfeldes wird jedoch vorzugsweise darauf geachtet, daß dieses die Optimumsbereiche für alle Bewertungskriterien enthält oder aber, daß bezüglich der Erstellung des dreidimensionalen Kennfeldes Prioritäten hinsichtlich der zu erzielenden Eigenschaften der Bewertungskriterien gesetzt werden.

Die in den Figuren 3 und 4 wiedergegebenen Kennlinien und Kennfelder stellen lediglich Beispiele dar, welche jedoch keine Beschränkung des erfindungsgemäßen Grundgedankens bedingen.

Bezüglich der sich ergebenden Kennfelder für die Motordrehzahländerung Δn_{M} werden Bereiche mit geringer Motordrehzahländerung und großer Motordrehzahländerung, d.h. mit aufheulendem oder stark gedrücktem Motor unterschieden. Die Grenzwerte für die einzelnen Zeitpunkte für das Öffnen und Schließen der Betätigungselemente der kommenden und gehenden Gangstufe werden dabei derart gewählt, daß in dem eingeschlossenen Bereich lediglich eine Motordrehzahländerung entsprechend dem Gangsprung erfolgt, während für die einzelnen Kennfelder, für die Beschleunigung und den Ruck eine geringe Änderung angestrebt wird. Aus den Schnittmengen der optimalen Kennfelder wird das räumliche Zuordnungskennfeld gebildet. Dieses erzeugt in Diagrammdarstellung einen geometrischen Körper, welcher beispielsweise als Ellipse oder schlauchförmiger Körper ausgeführt ist.

In der Figur 2 ist dieses räumliche Kennfeld verdeutlicht, wobei unter Berücksichtigung der über die einzelnen Kennlinien gewonnenen Erkenntnisse Tendenzen zur Beeinflussung der Bewertungskriterien, insbesondere der Drehzahländerung sowie der Übersetzungsänderung abgebildet werden können. Daraus wird ersichtlich, daß bei Bewegung in entsprechender horizontaler oder vertikaler Richtung im dreidimensionalen Kennfeld durch Änderung der Öffnungszeit der gehenden Betätigungselemente in Kombination oder für sich allein und des Schließzeitpunktes des zweiten kommenden Betätigungselementes bestimmte Schaltvorgänge, d.h. Gangstufenwechsel realisiert werden können oder aber nicht mehr erfolgen können bzw. bezüglich der Eigenschaften des Bewertungskriteriums der Drehzahländerung des Motors erhebliche Veränderungen erzielt werden können. Dieses Kennfeld bildet dabei den Anhaltspunkt für jeweils einen möglichen Gangstufenwechsel, wobei jedem Gangstufenwechsel ein derartiges dreidimensionales Kennfeld zugeordnet ist.

Die erfindungsgemäße Lösung der adaptiven Anpassung der einzelnen Öffnungs- und Schließzeiten, wobei die Öffnungs- und Schließzeiten der kommenden und gehenden Betätigungselemente eine eindeutige Zuordnung erfahren, sind nicht auf eine konkrete Getriebekonfiguration beschränkt. Entscheidend ist lediglich, daß es sich um eine Getriebebaueinheit mit Gruppenschaltung handelt. Bezugszeichenliste
- 1: Getriebebaueinheit
- 2: Grundgetriebeeinheit
- 3: Drehzahl-/Drehmomentenwandlungseinrichtung
- 4: Gruppenschaltsatz
- 5: der Grundgetriebebaueinheit zugeordnete Betätigungselemente
- 6: dem Gruppenschaltsatz zugeordnete Betätigungselemente
- 7: Steuervorrichtung
- 8: Steuereinrichtung
- 9: Eingang
- 10: Zuordnungseinrichtung
- 11: Ausgang
- 12: Ausgang
- 13: Ausgang
- 14: Stelleinrichtung
- 15: Stelleinrichtung
- 16: Stelleinrichtung
- E: Getriebeeingangswelle
- A: Getriebeausgangswelle
- Gₐₖₜᵤₑₗₗ: aktuell eingelegte Gangstufe
- G_{kommend}: einzulegende Gangstufe
- G_{gehend}: gehende Gangstufe
- t_{Schaltbeginn}: Schaltbeginn
- t_{SGK1}: Zeitpunkt des Schließbeginnes eines ersten kommenden Betätigungselementes
- t_{SGK2}: Zeitpunkt des Schließbeginns eines zweiten kommenden Betätigungselementes
- t_{ÖGA1}: Öffnungszeit eines ersten gehenden Betätigungselementes
- t_{ÖGA2}: Öffnungszeit des zweiten gehenden Betätigungselementes
- n: Motordrehzahl
- a: Beschleunigung
- Δn_{M}: Motordrehzahländerung
- Δn_{Maktuell}: aktuelle Motordrehzahländerung
- Δa: Beschleunigung
- k: Korrekturwert
- Δa_{Schaltmin}: Beschleunigungseinbruch beziehungsweise Minimalwert der Beschleunigung während eines Gangstufenwechsels

## Patentansprüche

1. Verfahren zur Verbesserung der Schaltqualität beim Wechsel zwischen zwei Gangstufen in einer Getriebebaueinheit (1) mit einem Gruppenschaltsatz (4), wobei jede Gangstufe durch die Betätigung wenigstens zweier Betätigungselemente (5,6) charakterisiert ist; bei welchem bei Vorliegen eines einen erforderlichen Gangwechsel wenigstens mittelbar bedingenden Signales das Schließen eines ersten Betätigungselementes der kommenden Gangstufe eingeleitet wird und die den Beginn des Öffnens oder Schließens charakterisierenden Öffnungs- und Schließzeiten des verbleibenden zweiten Betätigungselementes der kommenden Gangstufe und von zwei Betätigungselementen der gehenden Gangstufe eindeutig zueinander festgelegt werden;
bei welchem die Festlegung der Schließzeit des verbleibenden zweiten Betätigungselements der kommenden Gangstufe und der Öffnungszeiten der beiden Betätigungselemente der gehenden Gangstufe in einem dreidimensionalen Kennfeld erfolgt, welches durch wenigstens einen geometrischen Körper beschreibbar ist, und welches den optimalen Betriebsbereich hinsichtlich wenigstens einer Zustandsgröße bzw. Bewertungsgröße im Antriebsstrang beschreibt;
bei welchem während des vorzunehmenden Gangstufenwechsels die sich einstellende Änderung der wenigstens einen Zustandsgröße erfaßt wird und diese mit der sich durch die eindeutige Zuordnung im Kennfeld beschreibbaren theoretisch zu erzielenden Änderung verglichen wird und bei Abweichung eine Änderung des Betriebspunktes im dreidimensionalen Kennfeld durch Verschiebung wenigstens von einem der drei Einflußparameter, bestehend aus Schließzeit des verbleibenden zweiten Betätigungselementes der kommenden Gangstufe und der jeweiligen öffnungszeit der beiden Betätigungselemente der gehenden Gangstufe, jeweils um einen bestimmten Korrekturwert beim nächsten Gangstufenwechsel zwischen den beiden bestimmten Gangstufen erzielt wird.

2. Verfahren nach Anspruch 1,**dadurch gekennzeichnet, daß** der Korrekturwert vordefiniert ist.

3. Verfahren nach Anspruch 1, **dadurch gekennzeichnet, daß** der Korrekturwert für jeden folgenden Gangwechsel zwischen den gleichen Gangstufen berechnet wird.

4. Verfahren nach einem der Ansprüche 1 bis 3, **dadurch gekennzeichnet, daß** das dreidimensionale Kennfeld während der Betriebsdauer der Getriebebaueinheit anpaßbar ist.

5. Verfahren nach einem der Ansprüche 1 bis 4, **dadurch gekennzeichnet, daß** das dreidimensionale Kennfeld bei Inbetriebnahme der Getriebebaueinheit und Vornahme eines ersten Gangstufenwechsels zwischen zwei bestimmten Gangstufen aus einer in einem dreidimensionalen Diagramm darstellbaren Grundkennlinie entwickelbar ist.

6. Verfahren nach Anspruch 5, **dadurch gekennzeichnet, daß** die Grundkennlinie von einer Idealkennlinie für ein theoretisches Optimum einer den Gangwechsel wenigstens mittelbar charakterisierenden zustandsgröße gebildet wird.

7. Verfahren nach einem der Ansprüche 5 oder 6, **dadurch gekennzeichnet, daß** bei jedem Gangstufenwechsel zwischen den beiden bestimmten Gangstufen die den Gangstufenwechsel wenigstens mittelbar charakterisierenden Zustandsgrößen erfaßt werden und bei den aufeinanderfolgenden Gangstufenwechseln zwischen den bestimmten Gangstufen ein Vergleich hinsichtlich der Änderung der Zustandsgröße erfolgt und anhand der Änderung der Zustandsgröße die Tendenz zur Änderung der Einflußparameter ableitbar ist.

## Claims

1. A method for improving the gear-shifting quality when changing between two gear ratios in a transmission module (1) with a range change unit (4), with each gear ratio being **characterized by** the actuation of at least two actuating elements (5, 6), in which the closing of a first actuating element of the coming gear ratio is introduced in the presence of a signal causing at least indirectly a required change in gear and the opening and closing times of the remaining second actuating element of the coming gear ratio characterizing the start of the opening or closing and of two actuating elements of the going gear ratio are determined in a clear manner with respect to each other;
in which the determination of the closing time of the remaining second actuating element of the coming gear ratio and the opening times of the two actuating elements of the going gear ratio occurs in a three-dimensional characteristic map which can be described by at least one geometrical body and which describes the optimal operating range concerning at least one state quantity or evaluation quantity in the drive train;
in which during the gear-ratio change to be carried out the occurring change of the at least one state quantity is detected and the same is compared with the change which is to be achieved theoretically and can be described by the distinct allocation in the characteristic map and in the event of departure a change of the operating point in the three-dimensional characteristic map is achieved by a displacement of at least one of the three influencing parameters, consisting of the closing time of the remaining second actuating element of the coming gear ratio and the respective opening time of the two actuating elements of the going gear ratio, each by a specific corrective value during the next change of gear ratios between the two specific gear ratios.

2. A method according to claim 1, **characterized in that** the corrective value is predefined.

3. A method according to claim 1, **characterized in that** the corrective value is calculated for each change of gear between the same gear ratios.

4. A method according to one of the claims 1 to 3, **characterized in that** the three-dimensional characteristic map is adjustable during the operating period of the transmission module.

5. A method according to one of the claims 1 to 4, **characterized in that** the three-dimensional characteristic map can be developed from a basic characteristic which can be illustrated in a three-dimensional diagram upon start-up of the transmission module and performance of a first gear-ratio change between two specific gear ratios.

6. A method according to claim 5, **characterized in that** the basic characteristic is formed from an ideal characteristic for a theoretical optimum of a state quantity characterizing the gear change at least indirectly.

7. A method according to one of the claims 5 or 6, **characterized in that** the state quantities which characterize the gear change at least indirectly are detected in the case of each gear ratio change between the two specific gear ratios and a comparison concerning the change of the state quantity is made in the successive gear ratio changes between the specific gear ratios and the tendency towards the change of the influential parameters can be derived from the change of the state quantity.

## Revendications

1. Procédé pour améliorer la qualité du changement de rapport entre deux rapports d'une unité de boîte de vitesses (1) avec un groupe de changement de rapports (4), dans lequel chaque rapport est **caractérisé par** l'actionnement d'au moins deux éléments d'actionnement (5, 6) ;
dans lequel, en présence d'un signal entraînant au moins indirectement un changement de rapport nécessaire, la fermeture d'un premier élément d'actionnement du rapport à venir est provoquée et les temps d'ouverture et de fermeture des deux éléments d'actionnement restants du rapport à venir et de deux éléments d'actionnement du rapport à quitter, qui caractérisent le début de l'ouverture ou de la fermeture, sont clairement définis les uns par rapport aux autres ;
dans lequel la détermination du temps de fermeture du deuxième élément d'actionnement restant du rapport à quitter et des temps d'ouverture des deux éléments d'actionnement du rapport à quitter s'effectue dans un champ caractéristique à trois dimensions, qui peut être décrit par au moins un corps géométrique, et qui décrit la plage de fonctionnement optimale en ce qui concerne au moins une grandeur d'état ou une grandeur d'évaluation dans la chaîne de transmission ;
dans lequel, pendant le changement de rapport à effectuer, la modification qui s'établit de l'au moins une grandeur d'état est captée et celle-ci est comparée à la modification à atteindre théoriquement pouvant être décrite par l'affectation claire dans le champ caractéristique et, en cas d'écart, une modification du point de fonctionnement dans le champ caractéristique à trois dimensions par décalage d'au moins un des trois paramètres d'influence comprenant le temps de fermeture du deuxième élément d'actionnement restant du rapport à venir et le temps d'ouverture de chacun des deux éléments d'actionnement du rapport à quitter, selon une valeur de correction donnée, est réalisée lors du changement de rapport suivant entre les deux rapports déterminés.

2. Procédé selon la revendication 1, **caractérisé en ce que** la valeur de correction est prédéfinie.

3. Procédé selon la revendication 1, **caractérisé en ce que** la valeur de correction est calculée pour chaque changement de rapport suivant entre les mêmes rapports.

4. Procédé selon l'une des revendications 1 à 3, **caractérisé en ce que** le champ caractéristique à trois dimensions peut être adapté pendant la durée de fonctionnement de l'unité de boîte de vitesses.

5. Procédé selon l'une des revendications 1 à 4, **caractérisé en ce que** le champ caractéristique à trois dimensions peut être développé lors de la mise en service de l'unité de boîte de vitesses et de la réalisation d'un premier changement de rapport entre deux rapports donnés à partir d'une courbe caractéristique de base pouvant être représentée dans un diagramme à trois dimensions.

6. Procédé selon la revendication 5, **caractérisé en ce que** la courbe caractéristique de base est formée par une caractéristique idéale pour un optimum théorique d'une grandeur d'état caractérisant au moins indirectement le changement de rapport.

7. Procédé selon l'une des revendications 5 ou 6, **caractérisé en ce que** lors de chaque changement de rapport entre les deux rapports déterminés, les grandeurs d'état caractérisant au moins indirectement le changement de rapport sont relevées et lors des changements de rapport suivants entre les rapports déterminés, une comparaison est effectuée pour déterminer le changement de la grandeur d'état et la tendance au changement des paramètres d'influence peut être dérivée du changement de la grandeur d'état.
